# EUROPÄISCHE PATENTANMELDUNG

(11) **EP 4 371 925 A1**
(43) Veröffentlichungstag der Anmeldung: **22.05.2024**
(21) Anmeldenummer: 23205089.8
(22) Anmeldetag: 23.10.2023
(51) Int. Cl.: B66F 9/075, B66F 17/00, G06V 20/58

(54) **FLURFÖRDERZEUG UND VERFAHREN ZUM BETREIBEN EINES FLURFÖRDERZEUGS**

(30) Priorität: 16.11.2022 DE 102022130297
(71) Anmelder: STILL GmbH, 22113 Hamburg (DE)
(72) Erfinder: ERBTS, Patrick, 21244 Buchholz Nordheide (DE)
(74) Vertreter: Patentship Patentanwaltgesellschaft

(57) **Zusammenfassung**

Die Erfindung betrifft ein Flurförderzeug (100) zum Befördern von Ladungsträgern und/oder Waren (110) in einer Umgebung, insbesondere einem Warenlager. Bei dem Flurförderzeug (100) kann es sich um ein autonom, teil-autonom und/oder manuell betriebenes Flurförderzeug (100), insbesondere einen Gabelstapler (100) oder Industrieroboter (100) handeln. Das Flurförderzeug (100) umfasst eine Ereigniskamera (120a,b), welche einen Bildsensor mit einer Vielzahl von Pixelelementen umfasst, wobei die Vielzahl von Pixelelementen ausgebildet sind, in einem Blickfeld der Ereigniskamera (120a,b) lokale Helligkeitsänderungen zu erfassen und Bildsensordaten zu generieren. Ferner umfasst das Flurförderzeug (100) eine Auswerteeinrichtung (130), welche ausgebildet ist, auf der Grundlage der Bildsensordaten (121) Objektbewegungen von dynamischen Objekten (140) in der Umgebung des Flurförderzeugs (100) zu bestimmen. Ferner wird ein Verfahren zum Betreiben eines solchen Flurförderzeugs (100) beschrieben.

## Beschreibung

Die Erfindung betrifft ein Flurförderzeug zum Befördern von Ladungsträgern und/oder Waren in einer Umgebung, insbesondere einem Warenlager, sowie ein Verfahren zum Betreiben eines solchen Flurförderzeugs. Bei dem Flurförderzeug kann es sich um ein autonom, teil-autonom und/oder manuell betriebenes Flurförderzeug handeln, beispielsweise einen Gabelstapler oder einen Industrieroboter.

Für den Transport und die Lagerung von Produkten, Waren und Materialien werden oftmals Ladungsträger, beispielsweise Gitterboxen oder Paletten verwendet. Zur Handhabung derartiger Ladungsträger z.B. in der Intralogistik, d.h. dem innerbetrieblichen Materialfluss, z.B. in einem Warenlager, werden Flurförderzeuge verwendet, beispielsweise autonom, teil-autonom und/oder manuell betriebene Gabelstapler, Industrieroboter und dergleichen. Hierzu weisen Flurförderzeuge in der Regel ein Lastaufnahmemittel, beispielsweise zwei Lastgabeln auf, die in entsprechende Einschuböffnungen des Ladungsträgers eingeschoben werden können, um diesen aufzunehmen und zu transportieren. In der dynamischen Umgebung beispielsweise eines Warenlagers mit einer Vielzahl von dynamischen Objekten, wie Personen, anderen Flurförderzeugen und dergleichen, muss sichergestellt werden, dass bei der Bewegung eines autonom, teil-autonom und/oder manuell betriebenen Flurförderzeugs zum Befördern von Ladungsträgern und/oder Waren Kollisionen des Flurförderzeugs mit den dynamischen Objekten vermieden werden.

Der vorliegenden Erfindung liegt daher die Aufgabe zugrunde, ein verbessertes betriebenes Flurförderzeug zum Befördern von Ladungsträgern und/oder Waren in einer Umgebung, insbesondere einem Warenlager, sowie ein Verfahren zum Betreiben eines solchen Flurförderzeugs bereitzustellen, wobei bei der Bewegung des Flurförderzeugs in einer dynamischen Umgebung, wie beispielsweise in einem Warenlager oder in einer Fabrikhalle, Kollisionen des Flurförderzeugs mit dynamischen Objekten vermieden werden können.

Diese Aufgabe wird gemäß einem ersten Aspekt der Erfindung gelöst durch ein Flurförderzeug zum Befördern und Handhaben von Ladungsträgern und/oder Waren in einer Umgebung, insbesondere einem Warenlager. Bei dem Flurförderzeug kann es sich insbesondere um ein autonom, teil-autonom und/oder manuell betriebenes, d.h. von einem Bediener geführtes Flurförderzeug handeln, wie beispielsweise einen Gabelstapler oder einen mobilen Industrieroboter.

Das Flurförderzeug gemäß dem ersten Aspekt umfasst eine Ereigniskamera, welche einen Bildsensor mit einer Vielzahl von Pixelelementen umfasst, wobei die Vielzahl von Pixelelementen ausgebildet sind, in einem Blickfeld der Ereigniskamera lokale Helligkeitsänderungen zu erfassen und Bildsensordaten zu generieren. Ferner umfasst das Flurförderzeug gemäß dem ersten Aspekt eine Auswerteeinrichtung, welche ausgebildet ist, auf der Grundlage der Bildsensordaten Objektbewegungen von dynamischen Objekten in der Umgebung des Flurförderzeugs zu bestimmen. Erfindungsgemäß ist das Flurförderzeug somit mit wenigstens einer Ereigniskamera ausgestattet, die im Gegensatz zu herkömmlichen Kameras in einem Blickfeld nicht Helligkeiten, sondern Helligkeitsänderungen erfasst. Hierdurch lassen sich insbesondere dynamische Objekte, d.h. sich bewegende Objekte in der Umgebung des erfindungsgemäßen Flurförderzeugs erfassen.

In einer Ausführungsform ist die Ereigniskamera derart an dem Flurförderzeug angebracht, dass das Blickfeld der Ereigniskamera im Wesentlichen entlang einer Vorwärtsbewegungsrichtung des Flurförderzeugs liegt.

Gemäß einer Ausführungsform umfasst das Flurförderzeug wenigstens eine weitere Ereigniskamera, welche einen weiteren Bildsensor mit einer Vielzahl von weiteren Pixelelementen umfasst, wobei die Vielzahl von weiteren Pixelelementen ausgebildet sind, in einem weiteren Blickfeld der wenigstens einen weiteren Ereigniskamera lokale Helligkeitsänderungen zu erfassen und weitere Bildsensordaten zu generieren.

In einer Ausführungsform ist die wenigstens eine weitere Ereigniskamera derart an dem Flurförderzeug montiert, dass das weitere Blickfeld der wenigstens einen weiteren Ereigniskamera im Wesentlichen entlang einer Rückwärtsbewegungsrichtung und/oder senkrecht zu der Vorwärtsbewegungsrichtung des Flurförderzeugs liegt.

Gemäß einer Ausführungsform umfasst das Flurförderzeug ferner eine Benutzerschnittstelle, welche ausgebildet ist, einem Benutzer des Flurförderzeugs eine auf der Grundlage der Bildsensordaten bestimmte Objektbewegung eines dynamischen Objekts in der Umgebung des Flurförderzeugs anzuzeigen. Bei der Benutzerschnittstelle kann es sich beispielsweise um eine Anzeigeeinrichtung, d.h. ein Display zum Anzeigen eines optischen Warnsignals, einen Lautsprecher zum Anzeigen eines akustischen Warnsignals und/oder eine Einrichtung zum manuellen Steuern des Flurförderzeugs handeln, z.B. ein Joystick oder ein Lenkrad, welche ausgebildet ist, ein haptisches Warnsignal zu erzeugen.

In einer Ausführungsform ist die Auswerteeinrichtung ausgebildet, auf der Grundlage der Bildsensordaten Objektbewegungen von dynamischen Objekten in der Umgebung des Flurförderzeugs zu bestimmen, indem die Auswerteeinrichtung für ein jeweiliges dynamisches Objekt einen Bewegungsvektor und auf der Grundlage des Bewegungsvektors eine Kollisionswahrscheinlichkeit des jeweiligen dynamischen Objekts mit dem Flurförderzeug bestimmt.

Gemäß einer Ausführungsform ist die Auswerteeinrichtung ferner ausgebildet, ein haptisches, akustisches und/oder optisches Warnsignal auszugeben, falls die Kollisionswahrscheinlichkeit des Flurförderzeugs mit einem dynamischen Objekt in der Umgebung des Flurförderzeugs größer als ein Schwellenwert ist.

In einer Ausführungsform umfasst das Flurförderzeug ferner eine Steuereinrichtung zur Steuerung der Bewegung des Flurförderzeugs, wobei die Steuereinrichtung ausgebildet ist, die Bewegung des Flurförderzeugs auf der Grundlage der auf der Grundlage der Bildsensordaten bestimmten Objektbewegungen von dynamischen Objekten in der Umgebung des Flurförderzeugs zu steuern.

Gemäß einer Ausführungsform ist die Steuereinrichtung ausgebildet, das Flurförderzeug abzubremsen und/oder zum Stillstand zu bringen, falls die Kollisionswahrscheinlichkeit des Flurförderzeugs mit einem dynamischen Objekt in der Umgebung des Flurförderzeugs größer als ein Schwellenwert ist.

Die Aufgabe wird gemäß einem zweiten Aspekt der Erfindung gelöst durch ein Verfahren zum Betreiben eines Flurförderzeugs zum Befördern von Ladungsträgern und/oder Waren in einer Umgebung, insbesondere einem Warenlager. Wie bereits vorstehend beschrieben, kann es sich bei dem Flurförderzeug um ein autonomes, teilautonomes und/oder manuell betriebenes, d.h. von einem Bediener geführtes Flurförderzeug, insbesondere mit einem Fahrer als Bediener, handeln. Das Verfahren gemäß dem zweiten Aspekt umfasst die Schritte:
Betreiben einer Ereigniskamera, welche einen Bildsensor mit einer Vielzahl von Pixelelementen umfasst, wobei die Vielzahl von Pixelelementen ausgebildet sind, in einem Blickfeld der Ereigniskamera lokale Helligkeitsänderungen zu erfassen, die mit einem Zeitstempel versehen sein können, und Bildsensordaten zu generieren; und Bestimmen von Objektbewegungen von dynamischen Objekten in der Umgebung des Flurförderzeugs auf der Grundlage der Bildsensordaten.

Das Verfahren gemäß dem zweiten Aspekt der Erfindung kann mittels dem Flurförderzeug gemäß dem ersten Aspekt der Erfindung durchgeführt werden. Daher ergeben sich weitere mögliche Ausführungsformen des Verfahrens gemäß dem zweiten Aspekt der Erfindung aus den vorstehend und nachstehend beschriebenen weiteren Ausführungsformen des Flurförderzeugs gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigen:
- Figur 1: eine schematische Darstellung eines Flurförderzeugs in Form eines Gabelstaplers gemäß einer Ausführungsform; und
- Figur 2: ein Flussdiagramm, welches Schritte eines Verfahrens zum Betreiben eines Flurförderzeugs gemäß einer Ausführungsform illustriert.

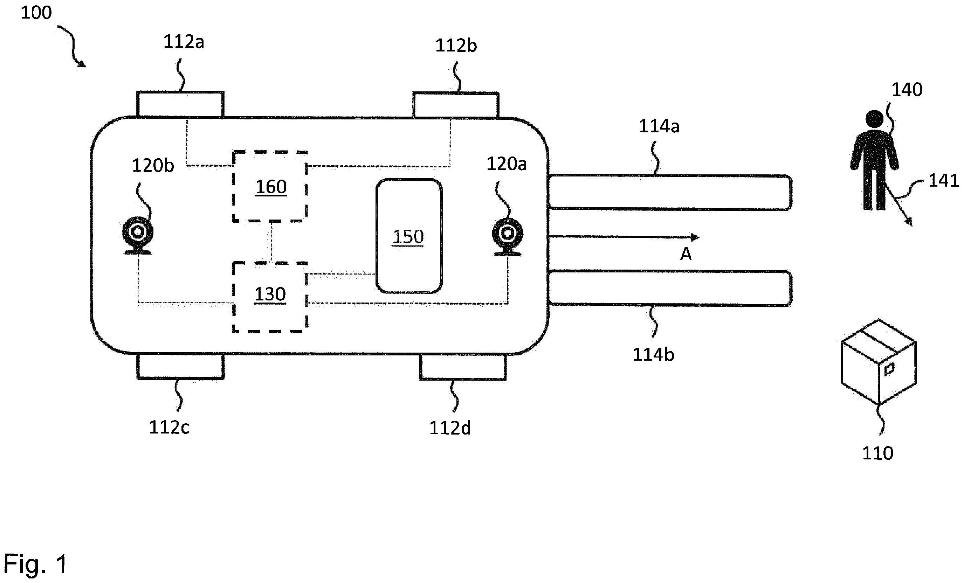

Figur 1 zeigt eine schematische Darstellung eines Flurförderzeugs 100 in Form eines Gabelstaplers 100 gemäß einer Ausführungsform zum Handhaben und Befördern von Ladungsträgern und/oder Waren 110 in einer Umgebung des Flurförderzeugs 100, insbesondere einem Warenlager oder einer Fabrikhalle. Bei dem Flurförderzeug 100 kann es sich insbesondere um ein autonom, teil-autonom und/oder manuell betriebenes, d.h. von einem Bediener geführtes Flurförderzeug 100 handeln. Bei der in Figur 1 dargestellten Ausführungsform umfasst das Flurförderzeugs 100 in Form des Gabelstaplers 100 zwei Lastgabeln 114a,b zum Handhaben und Befördern von Ladungsträgern und/oder Waren 110.

Das Flurförderzeug 100 umfasst eine erste Ereigniskamera 120a mit einem Blickfeld entlang der Vorwärtsbewegungsrichtung des Flurförderzeugs 100, welche in Figur 1 durch den Vektor A dargestellt ist, und eine zweite Ereigniskamera 120b mit einem Blickfeld entlang der Rückwärtsbewegungsrichtung des Flurförderzeugs 100. Alternativ oder zusätzlich kann das Flurförderzeug 100 eine oder mehrere weitere Ereigniskameras umfassen, deren Blickfeld jeweils in einer Richtung senkrecht zu der Vorwärtsbewegungsrichtung A des Flurförderzeugs 100 ausgerichtet ist, um beispielsweise die Umgebung des Flurförderzeugs 100 in allen Richtungen abzudecken.

Jede Ereigniskamera 120a,b umfasst einen Bildsensor mit einer Vielzahl von Pixelelementen, wobei die Vielzahl von Pixelelementen ausgebildet sind, in dem Blickfeld der jeweiligen Ereigniskamera 120a,b lokale Helligkeitsänderungen zu erfassen und auf dieser Grundlage Bildsensordaten zu generieren. Die Pixelelemente der Ereigniskameras 120a,b reagieren unabhängig voneinander auf auftretende Helligkeitsänderungen in dem Blickfeld der jeweiligen Ereigniskameras 120a,b. Jedes Pixelelement speichert einen Referenzhelligkeitspegel und vergleicht ihn kontinuierlich mit einem aktuell gemessenen Helligkeitspegel. Wenn der Helligkeitsunterschied einen Schwellenwert überschreitet, setzt dieses Pixelelement seinen Referenzhelligkeitspegel zurück und generiert ein Ereignis, beispielsweise ein diskretes Paket, welches die Pixeladresse und einen Zeitstempel enthält. Ereignisse können auch Informationen über die Polarität, d.h. Zunahme oder Abnahme einer Helligkeitsänderung oder eine sofortige Messung der momentanen Helligkeit enthalten. Daher erzeugen die Ereigniskameras 120a,b Bildsensordaten in Form eines asynchronen Ereignisdatenstroms, der durch Helligkeitsänderungen in der Umgebung der Ereigniskameras 120a,b ausgelöst wird.

Ferner umfasst das Flurförderzeug 100 eine Auswerteeinrichtung 130, beispielsweise einen Prozessor oder Controller 130 mit entsprechender Software. Die Auswerteeinrichtung 130 ist ausgebildet, die Bildsensordaten von den Ereigniskameras 120a,b zu erhalten und auf der Grundlage der von den Ereigniskameras 120a,b bereitgestellten Bildsensordaten Objektbewegungen von dynamischen Objekten 140, d.h. sich bewegenden Objekten 140, wie beispielsweise Personen oder andere Flurförderzeuge, in der Umgebung des Flurförderzeugs 100 zu bestimmen. In einer Ausführungsform ist die Auswerteeinrichtung 130 des Flurförderzeugs 100 ausgebildet, auf der Grundlage der Bildsensordaten Objektbewegungen der dynamischen Objekte 140 in der Umgebung des Flurförderzeugs 100 zu bestimmen, indem die Auswerteeinrichtung 130 für ein jeweiliges dynamisches Objekt 140 einen Bewegungsvektor und auf der Grundlage des Bewegungsvektors eine Kollisionswahrscheinlichkeit des jeweiligen dynamischen Objekts 140 mit dem Flurförderzeug 100 bestimmt. Beispielsweise kann bei dem in Figur 1 schematisch dargestellten Szenario die Auswerteeinrichtung 130 des Flurförderzeugs 100 auf der Grundlage der von der Ereigniskamera 120a bereitgestellten Bildsensordaten den Bewegungsvektor 141 der Person 140 bestimmen und auf der Grundlage des so ermittelten Bewegungsvektors 141 der Person 140 sowie der Bewegung des Flurförderzeugs die Kollisionswahrscheinlichkeit der Person 140 mit dem Flurförderzeug 100 abschätzen.

In der in Figur 1 dargestellten Ausführungsform umfasst das Flurförderzeug 100 ferner eine Steuereinrichtung 160, beispielsweise einen Prozessor oder Controller 160 mit entsprechend eingerichteter Software, zur Steuerung der Bewegung des Flurförderzeugs 100. Dabei ist gemäß einer Ausführungsform die Steuereinrichtung 160 ausgebildet, die Bewegung des Flurförderzeugs 100 auf der Grundlage der auf der Grundlage der Bildsensordaten bestimmten Objektbewegungen der dynamischen Objekte 140, beispielsweise der Person 140 in der Umgebung des Flurförderzeugs 100 zu steuern. Hierzu kann die Steuereinrichtung über Steuerleitungen mit Rädern 112a-d des Flurförderzeugs 100 verbunden sein, um die Räder 112a-d bzw. mit dem Rädern 112a-d verbundene Radbremsen anzusteuern. Beispielsweise kann die Steuereinrichtung 160 ausgebildet sein, das Flurförderzeug 100 abzubremsen und/oder zum Stillstand zu bringen, falls die Kollisionswahrscheinlichkeit des Flurförderzeugs 100 mit einem dynamischen Objekt 140 in der Umgebung des Flurförderzeugs größer als ein Schwellenwert ist.

Bei der in Figur 1 dargestellten Ausführungsform umfasst das Flurförderzeug 100 ferner eine Benutzerschnittstelle 150 in Form eines Displays 150, welches ausgebildet ist, einem Benutzer des Flurförderzeugs 100 eine auf der Grundlage der Bildsensordaten bestimmte Objektbewegung eines dynamischen Objekts 140 in der Umgebung des Flurförderzeugs 100 anzuzeigen. Alternativ oder zusätzlich kann die Benutzerschnittstelle 150 einen Lautsprecher für akustische Signale und/oder eine Einrichtung zum manuellen Steuern des Flurförderzeugs 100 umfassen, z.B. einen Joystick oder ein Lenkrad, wobei die Einrichtung zum manuellen Steuern des Flurförderzeugs 100 ausgebildet ist, ein haptisches Signal zu erzeugen.

Gemäß einer Ausführungsform ist die Auswerteeinrichtung 130 ferner ausgebildet, insbesondere über die Benutzerschnittstelle 150 ein haptisches, akustisches und/oder optisches Warnsignal auszugeben, falls die Kollisionswahrscheinlichkeit des Flurförderzeugs 100 mit einem dynamischen Objekt 140 in der Umgebung des Flurförderzeugs 100 größer als ein Schwellenwert ist. Dabei kann, wie bereits vorstehend beschrieben, das Warnsignal optisch durch Darstellen auf dem Display 150, akustisch durch Ausgabe eines Warntons und/oder haptisch durch Vibrieren der Einrichtung zum manuellen Steuern des Flurförderzeugs 100, z.B. des Joysticks oder des Lenkrads erfolgen. Die Auswerteeinrichtung 130 des Flurförderzeugs kann ferner ausgebildet sein, ein anderes haptisches, akustisches und/oder optisches Warnsignal über die Benutzerschnittstelle 150 auszugeben, falls ein dynamisches Objekt 140 in dem durch die Ereigniskameras 120a,b abgedeckten Bereich detektiert worden ist.

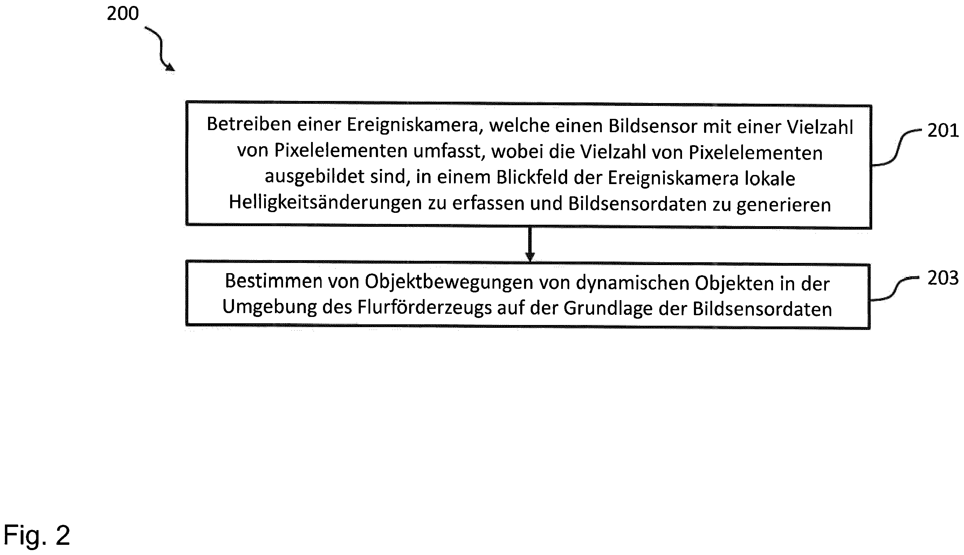

Figur 2 zeigt ein Flussdiagramm, welches Schritte eines Verfahrens 200 zum Betreiben des Flurförderzeugs 100 zum Befördern von Ladungsträgern und/oder Waren 110 in einer Umgebung, insbesondere einem Warenlager, zeigt. Das Verfahren 200 umfasst einen Schritt 201 des Betreibens der Ereigniskameras 120a,b, welche jeweils einen Bildsensor mit einer Vielzahl von Pixelelementen umfassen, wobei die Vielzahl von Pixelelementen ausgebildet sind, in einem Blickfeld der jeweiligen Ereigniskamera 120a,b lokale Helligkeitsänderungen zu erfassen, die mit einem Zeitstempel versehen sein können, und Bildsensordaten zu generieren. Ferner umfasst das Verfahren 200 einen Schritt 203 des Bestimmens von Objektbewegungen von dynamischen Objekten 140 in der Umgebung des Flurförderzeugs 100 auf der Grundlage der Bildsensordaten.

## Patentansprüche

1. Flurförderzeug (100) zum Befördern von Ladungsträgern und/oder Waren (110) in einer Umgebung, insbesondere einem Warenlager, wobei das Flurförderzeug (100) umfasst:
eine Ereigniskamera (120a,b), welche einen Bildsensor mit einer Vielzahl von Pixelelementen umfasst, wobei die Vielzahl von Pixelelementen ausgebildet sind, in einem Blickfeld der Ereigniskamera (120a,b) lokale Helligkeitsänderungen zu erfassen und Bildsensordaten zu generieren; und
eine Auswerteeinrichtung (130), welche ausgebildet ist, auf der Grundlage der Bildsensordaten Objektbewegungen von dynamischen Objekten (140) in der Umgebung des Flurförderzeugs (100) zu bestimmen.

2. Flurförderzeug (100) nach Anspruch 1, wobei die Ereigniskamera (120a,b) derart an dem Flurförderzeug (100) montiert ist, dass das Blickfeld der Ereigniskamera (120a,b) im Wesentlichen entlang einer Vorwärtsbewegungsrichtung (A) des Flurförderzeugs (100) liegt.

3. Flurförderzeug (100) nach Anspruch 2, wobei das Flurförderzeug (100) wenigstens eine weitere Ereigniskamera (120a,b) umfasst, welche einen weiteren Bildsensor mit einer Vielzahl von weiteren Pixelelementen umfasst, wobei die Vielzahl von weiteren Pixelelementen ausgebildet sind, in einem weiteren Blickfeld der wenigstens einen weiteren Ereigniskamera (120a,b) lokale Helligkeitsänderungen zu erfassen und weitere Bildsensordaten zu generieren.

4. Flurförderzeug (100) nach Anspruch 3, wobei die wenigstens eine weitere Ereigniskamera (120a,b) derart an dem Flurförderzeug (100) montiert ist, dass das weitere Blickfeld der wenigstens einen weiteren Ereigniskamera (120a,b) im Wesentlichen entlang einer Rückwärtsbewegungsrichtung und/oder senkrecht zu der Vorwärtsbewegungsrichtung (A) des Flurförderzeugs (100) liegt.

5. Flurförderzeug (100) nach einem der vorhergehenden Ansprüche, wobei das Flurförderzeug (100) ferner eine Benutzerschnittstelle (150) umfasst, welche ausgebildet ist, einem Benutzer des Flurförderzeugs (100) eine auf der Grundlage der Bildsensordaten bestimmten Objektbewegung von dynamischen Objekten (140) in der Umgebung des Flurförderzeugs (100) anzuzeigen.

6. Flurförderzeug (100) nach einem der vorhergehenden Ansprüche, wobei die Auswerteeinrichtung (130) ausgebildet ist, auf der Grundlage der Bildsensordaten Objektbewegungen von dynamischen Objekten (140) in der Umgebung des Flurförderzeugs (100) zu bestimmen, indem die Auswerteeinrichtung (130) für ein jeweiliges dynamisches Objekt (140) einen Bewegungsvektor (141) und auf der Grundlage des Bewegungsvektors (141) eine Kollisionswahrscheinlichkeit des jeweiligen dynamischen Objekts (140) mit dem Flurförderzeug (100) bestimmt.

7. Flurförderzeug (100) nach Anspruch 6, wobei die Auswerteeinrichtung (130) ferner ausgebildet ist, ein haptisches, akustisches und/oder optisches Warnsignal auszugeben, falls die Kollisionswahrscheinlichkeit des Flurförderzeugs (100) mit einem dynamischen Objekt (140) in der Umgebung des Flurförderzeugs (100) größer als ein Schwellenwert ist.

8. Flurförderzeug (100) nach Anspruch 6 oder 7, wobei das Flurförderzeug (100) ferner eine Steuereinrichtung (160) zur Steuerung der Bewegung des Flurförderzeugs (100) umfasst, wobei die Steuereinrichtung (160) ausgebildet ist, die Bewegung des Flurförderzeugs (100) auf der Grundlage der auf der Grundlage der Bildsensordaten bestimmten Objektbewegungen von dynamischen Objekten (140) in der Umgebung des Flurförderzeugs (100) zu steuern.

9. Flurförderzeug (100) nach Anspruch 8, wobei die Steuereinrichtung (160) ausgebildet ist, das Flurförderzeug (100) abzubremsen und/oder zum Stillstand zu bringen, falls die Kollisionswahrscheinlichkeit des Flurförderzeugs (100) mit einem dynamischen Objekt (140) in der Umgebung des Flurförderzeugs (100) größer als ein Schwellenwert ist.

10. Flurförderzeug (100) nach einem der vorstehenden Ansprüche, wobei die von den Pixelelementen des Bildsensors in dem Blickfeld der Ereigniskamera (120a,b) erfassten lokalen Helligkeitsänderungen mit einem jeweiligen Zeitstempel versehen sind.

11. Verfahren (200) zum Betreiben eines Flurförderzeugs (100) zum Befördern von Ladungsträgern und/oder Waren (110) in einer Umgebung, insbesondere einem Warenlager, wobei das Verfahren (200) umfasst:
Betreiben (201) einer Ereigniskamera (120a,b), welche einen Bildsensor mit einer Vielzahl von Pixelelementen umfasst, wobei die Vielzahl von Pixelelementen ausgebildet sind, in einem Blickfeld der Ereigniskamera (120a,b) lokale Helligkeitsänderungen zu erfassen und Bildsensordaten zu generieren; und
Bestimmen (203) von Objektbewegungen von dynamischen Objekten (140) in der Umgebung des Flurförderzeugs (100) auf der Grundlage der Bildsensordaten.
